# EUROPÄISCHE PATENTANMELDUNG

(11) **EP 0 578 927 A2**
(43) Veröffentlichungstag der Anmeldung: **19.01.1994**
(21) Anmeldenummer: 93106210.3
(22) Anmeldetag: 16.04.1993
(51) Int. Cl.: F16D 69/04, F16D 65/12

(54) **Bremsscheibe und Verfahren zum Herstellen einer Bremsscheibe**

(30) Priorität: 27.05.1992 DE 4217549
(71) Anmelder: SEW-EURODRIVE GMBH & CO., D-76642 Bruchsal (DE)
(72) Erfinder: Fischer, Horst, W-7526 Ubstadt-Weiher 3 (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Zur Vereinfachung der Herstellung einer Bremsscheibe sowie der Verbesserung des Halts zwischen einem Träger der Bremsscheibe und dem mit diesem verbundenen Bremsbelag sieht die Erfindung bei einer derartigen Bremsscheibe vor, daß der Bremsbelag durch in seine Poren eingedrungenes Tragkörpermaterial mit dem Tragkörper fest verbunden ist, wobei die Bremsscheibe erfindungsgemäß dadurch hergestellt wird, daß der Bremsbelag in eine für ihn vorgesehene Zusatzausnehmung in einem Formwerkzeug für den Tragkörper eingelegt wird und das Tragkörpermaterial bei eingelegtem Bremsbelag in das Formwerkzeug eingespritzt wird und in die Poren des Bremsbelags eingepreßt wird.

## Beschreibung

Die Erfindung betrifft eine Bremsscheibe, mit einem scheibenförmigen Tragkörper und einem mit diesem verbundenen ringförmigen porösen Bremsbelag, sowie ein Verfahren zum Herstellen einer solchen Bremsscheibe. Die Erfindung bezieht sich auf Bremsscheiben für Elektromotoren. Derartige Bremsscheiben weisen einen Träger auf, der in der Regel aus Aluminiumdruckguß besteht. Auf den Stirnseiten des Trägers in deren äußerem Bereich sind ringförmige Reib- oder Bremsbeläge aus porösem organischem Material aufgeklebt. Die Herstellung einer solchen Bremsscheibe ist fertigungstechnisch aufwendig. Durch die Befestigung des Bremsbelags auf einem Träger durch Verkleben ist lediglich ein solcher Halt gegeben, daß die Gefahr besteht, daß sich der Bremsbelag lösen kann.

Der Erfindung liegt daher die Aufgabe zugrunde, unter Vermeidung der genannten Nachteile eine Bremsscheibe zu schaffen, die einfacher herzustellen ist und eine zuverlässige Verbindung zwischen Bremsbelag und Träger sicherstellt.

Erfindungsgemäß wird die genannte Aufgabe bei einer Bremsscheibe der eingangs genannten Art dadurch gelöst, daß der Bremsbelag durch in seine Poren eingedrungenes Tragkörpermaterial mit dem Tragkörper fest verbunden ist. In bevorzugter Ausgestaltung ist vorgesehen, daß der Tragkörper die Bremsscheibe teilweise umgreift, wodurch der Halt des Bremsbelags auf einem Träger noch weiter erhöht wird. Der Tragkörper besteht dabei vorzugsweise aus Kunststoff, insbesondere Duroplast wie Bakelite. Die Bremsscheibe kann insbesondere auch als Bremslüfter mit rückseitig angeordneten radialen Rippen ausgebildet sein. Zur Herstellung der erfindungsgemäßen Bremsscheibe sieht ein erfindungsgemäßes Verfahren vor, daß der Bremsbelag in eine für ihn vorgesehene Zusatzausnehmung in einem Formwerkzeug für den Tragkörper eingelegt wird und das Tragkörpermaterial bei eingelegtem Bremsbelag in das Formwerkzeug eingespritzt wird und in die Poren des Bremsbelags eingepreßt wird, wobei insbesondere das Tragkörpermaterial den Bremsbelag auf seinen äußeren und inneren Mantelseiten teilweise umgreift.

Während die erfindungsgemäße Bremsscheibe grundsätzlich auch eine vollständige Bremsscheibe sein kann, bei der auf beiden Stirnseiten des Trägers Bremsbeläge in der erfindungsgemäßen Weise aufgebracht und befestigt sind, kann die in der beschriebenen Weise ausgestaltete und hergestellte Bremsscheibe auch ein Bremsscheibenteil einer zweiteiligen Bremsscheibe sein, wobei zwei derartige Teile mit ihren rückwärtigen, nicht mit einem Bremsbelag versehenen Stirnseiten gegeneinander gelegt, durch elastische Mittel einerseits aneinandergehalten und andererseits so in radialer Richtung gegeneinander verspannt werden, daß ein aufgrund Herstellungstoleranzen gegebenes Spiel zwischen der Innenverzahnung der Bremsscheiben und der Außenverzahnung der mit einer Motorwelle verbundenen Nabe, auf die die Bremsscheibe aufgesetzt wird, ausgeglichen wird.

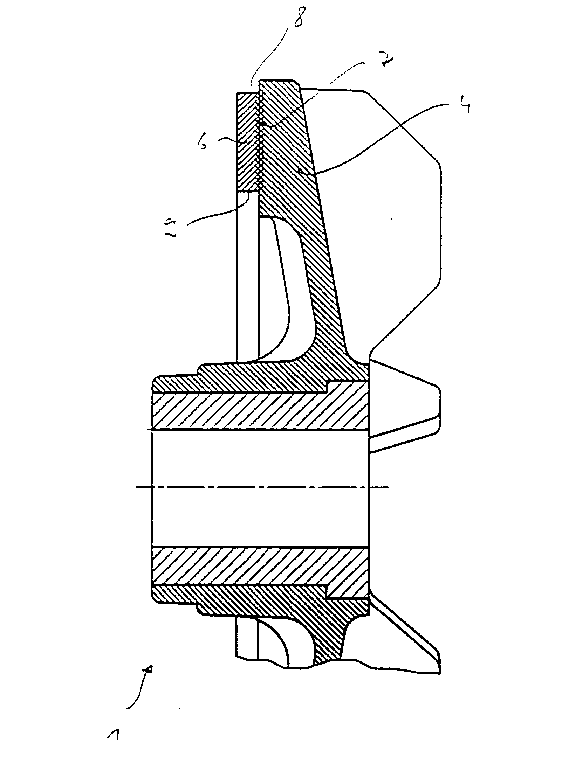

Weitere Vorteile und Merkmale der Erfindung ergeben sich aus der nachfolgenden Beschreibung, in der ein Ausführungsbeispiel unter Bezugnahme auf die Zeichnung im einzelnen erläutert ist. Dabei zeigt die einzige Figur:
einen Teilschnitt durch eine erfindungsgemäße Bremsscheibe.

Bei der in der Zeichnung dargestellten Bremsscheibe 1 handelt es sich um eine Bremsscheibe in Form eines Bremslüfters. Die erfindungsgemäße Bremsscheibe 1 besteht aus einem radialsymmetrischen Träger 4 und einem ringförmigen Bremsbelag 6. Der Bremsbelag 6 liegt mit seiner Rückseite 7 an den Träger 4 an und wird weiterhin an seiner äußeren und seiner inneren Umfangsseite 8, 9 durch den Träger 2 über einen Teil der Höhe des Bremsbelags 6 umfaßt. Der Bremsbelag 6 besteht aus einem mehr oder minder porösen, insbesondere organischen Reibbelag, während der Träger 4 im dargestellten Ausführungsbeispiel aus Kunststoff besteht. Die Verbindung zwischen Bremsbelag 6 und Träger 4 ist derart, daß Material des Trägers 4 in Poren des Bremsbelags 6 derart eingedrungen wird, daß hierdurch sowohl eine kraft- als auch eine formschlüssige Verbindung zwischen Bremsbelag 6 und Träger 4 hergestellt ist.

Zur Herstellung der erfindungsgemäßen Bremsscheibe 1 wird ein zumindestens zweiteiliges Formwerkzeug mit Formwerkzeugteilen verwendet, die nach Zusammenführung einen der Form der Bremsscheibe 1 entsprechenden Hohlraum umfassen. Im Werkzeug befindet sich eine ringförmige Zusatzausnehmung, die frei mit dem Hohlraum in Verbindung steht. In die Zusatzausnehmung wird vor Zusammenführung der Werkzeugteile der Bremsbelag 6 eingelegt. Anschließend werden die Werkzeugteile zusammengeführt und schließlich in zumindestens einen Einlaß das Material des Trägers 4 in den verbleibenden Hohlraum zwischen den Werkzeugteilen eingepreßt. Durch den aufgewendeten erhöhten Druck wird das Material des Trägers 4 in die Poren des Bremsbelags 6 eingedrückt. Nach Erkalten wird das Werkzeug geöffnet und die Bremsscheibe kann mit dem Träger 4 und dem mit diesem fest verbundenen Bremsbelag 6 in der Form der Zeichnung entnommen werden.

## Patentansprüche

1. Bremsscheibe, mit einem scheibenförmigen Tragkörper und einem mit diesem verbundenen ringförmigen porösen Bremsbelag, dadurch gekennzeichnet, daß der Bremsbelag (6) durch in seine Poren eingedrungenes Tragkörpermaterial mit dem Tragkörper (4) fest verbunden ist.

2. Bremsscheibe nach Anspruch 1, dadurch gekennzeichnet, daß der Tragkörper (4) den Bremsbelag (6) teilweise umgreift.

3. Bremsscheibe nach Anspruch 1 oder 2, dadurch gekennzeichnet, daß der Tragkörper aus Kunststoff besteht.

4. Verfahren zum Herstellen einer Bremsscheibe mit einem scheibenförmigen Tragkörper und einem mit diesem verbundenen ringförmigen porösen Bremsbelag, dadurch gekennzeichnet, daß der Bremsbelag in eine für ihn vorgesehene Zusatzausnehmung in einem Formwerkzeug für den Tragkörper eingelegt wird und das Tragkörpermaterial bei eingelegtem Bremsbelag in das Formwerkzeug eingespritzt wird und in die Poren des Bremsbelags eingepreßt wird.

5. Verfahren nach Anspruch 4, dadurch gekennzeichnet, daß das Tragkörpermaterial den Bremsbelag (6) auf seinen äußeren und inneren Mantelseiten teilweise umgreift.
